# EUROPEAN PATENT APPLICATION

(11) **EP 2 549 362 A2**
(43) Date of publication of application: **23.01.2013**
(21) Application number: 12177161.2
(22) Date of filing: 19.07.2012
(51) Int. Cl.: G06F 3/023, G06F 3/048

(54) **Electronic device and method for sensing input gesture and inputting selected symbol**

(30) Priority: 19.07.2011 KR 20110071385; 10.07.2012 KR 20120074980
(71) Applicant: Samsung Electronics Co., Ltd., Suwon-si, Gyeonggi-do, 443-742 (KR)
(72) Inventor: Park, Jung-Hoon, Seoul (KR)
(74) Representative: Harrison Goddard Foote

(57) **Abstract**

An electronic device and method for sensing an input gesture and inputting a selected symbol are provided. An operation method of the electronic device includes determining that an input means has been sensed in a position below a predetermined height from touch regions, determining that the position of the input means is in any one touch region among the touch regions partitioned into a plurality of regions, and analyzing a gesture of the input means and inputting any one of at least one mark type allocated to the touch region in which the input means is positioned.

## Description

### TECHNICAL FIELD OF THE INVENTION

The present disclosure relates to an input system.

### BACKGROUND OF THE INVENTION

With the growth of multimedia information services, the demand for an electronic device capable of supporting these services for the disabled is becoming apparent. Particularly, an electronic device for the blind has to be able to apply a powerful user interface capable of efficiently supporting an auditory sense, a tactile sense and the like and make up for a limited ability of a user.

At present, most electronic devices is made for those with normal abilities. For example, because interfaces between the electronic device and people are usually implemented through a touch screen, there is a problem that the blind have a difficulty in being provided with a service using the electronic device.

In a conventional keyboard input system, there is a disadvantage that input may be impossible in a smart touch device or virtual space where physically recognizing a keyboard is not possible. Accordingly, in a flat touch type keyboard input system, there is a problem that disabled or vision-impaired users cannot easily know whether a key has been properly input, because such users may have poor eyesight and also do not receive a feedback reaction that the key has been properly pressed.

### SUMMARY OF THE INVENTION

To address the above-discussed deficiencies of the prior art, it is a primary object to provide at least the advantages below. Accordingly, one aspect of the present disclosure is to provide an apparatus and method in which a user can input as desired through a connection operation of one-touch input in a smart device not capable of recognizing a character position of a keyboard or in a spatial input virtual space on the smart device.

Another aspect of the present disclosure is to provide an apparatus and method easily available by the vision-impaired, the blind, the old, and even the general public not accustomed to a smart device.

A further aspect of the present disclosure is to provide an apparatus and method capable of giving a feedback to a user through eyesight, an auditory sense, and a tactile sense, and meeting various desires of the user.

The above aspects are achieved by providing an electronic device and method for sensing an input gesture and inputting a selected symbol.

An operation method of an electronic device is provided. The method includes determining that an input means has been sensed in a position below a predetermined height from touch regions, determining that the position of the input means is in any one touch region among the touch regions partitioned into a plurality of regions, and analyzing a gesture of the input means and inputting any one of at least one mark type allocated to the touch region in which the input means is positioned.

In some embodiments, determining that the input means has been sensed in the position below the set height from the touch region can sense a height from the touch region to the input means using at least one of a camera, a piezoelectric sensor, an infrared sensor, and a touch pad.

In some embodiments, the method can further include displaying a selected mark type among at least one mark type allocated to the touch region in which the input means is positioned.

In some embodiments, the method can further include outputting, by sound, information about a selected mark type among a plurality of mark types allocated to the touch region in which the input means is positioned.

In some embodiments, the method can further include forwarding a tactile signal to the input means upon a determination that the input means has moved between the respective touch regions partitioned into the plurality of regions.

In some embodiments, the method can further include zooming-in the touch region in which the input means is positioned as much as a predetermined size, zooming-out the remnant region as much as a predetermined size, and displaying the zoomed-in/out regions.

In some embodiments, analyzing the gesture of the input means and inputting any one of the at least one mark type allocated to the touch region in which the input means is positioned can include receiving a selection of any one of at least one mark type allocated to the touch region in which the input means is positioned, determining that the input means is in a position higher than the predetermined height and is not sensed, determining that a predetermined time has lapsed in a state where the input means is not sensed, and inputting the selected mark type.

In some embodiments, the method can further include sensing a first gesture of the input means and, if it is determined that the sensed first gesture is the same as a predetermined gesture, receiving a selection of a mark type of secondary order among at least one mark type of the same kind allocated to the touch region, according to a predetermined order.

In some embodiments, the method can further include sensing a second gesture of the input means and, if it is determined that the sensed second gesture is the same as a set gesture, converting a form of a currently selected mark type to a form of a mark type of a different kind, according to a predetermined order.

In some embodiments, the mark type can include at least one of a numeral, a character, and a symbol.

An electronic device is provided. The electronic device includes at least one of a camera sub system, a motion sensor, and a touch screen configured to determine that an input means has been sensed in a position below a predetermined height from touch regions, and determine that the position of the input means is included in any one touch region among the touch regions partitioned into a plurality of regions, and a processor unit configured to analyze a gesture of the input means and input any one of at least one mark type allocated to the touch region in which the input means is positioned.

In some embodiments, at least one of the camera sub system, the motion sensor, and the touch screen can sense a height from the touch region to the input means.

In some embodiments, the touch screen can display a selected mark type among at least one mark type allocated to the touch region in which the input means is positioned.

In some embodiments, the device can further include an audio sub system for outputting, by sound, information about a selected mark type among a plurality of mark types allocated to the touch region in which the input means is positioned.

In some embodiments, the touch screen can forward a tactile signal to the input means upon a determination that the input means has moved between the respective touch regions partitioned into the plurality of regions.

In some embodiments, the touch screen can zoom-in the touch region in which the input means is positioned as much as a predetermined size, zoom-out the remnant region as much as a predetermined size, and display the zoomed-in/out regions.

In some embodiments, the touch screen can receive a selection of any one of at least one mark type allocated to the touch region in which the input means is positioned, and the processor unit can determine that the input means is in a position higher than the set height and is not sensed, determine that a predetermined time has lapsed in a state where the input means is not sensed, and input the selected mark type.

In some embodiments, the processor unit can sense a first gesture of the input means and, if it is determined that the sensed first gesture is the same as a predetermined gesture, the touch screen can receive a selection of a mark type of secondary order among at least one mark type of the same kind allocated to the touch region, according to a predetermined order.

In some embodiments, the processor unit can sense a second gesture of the input means and, if it is determined that the sensed second gesture is the same as a predetermined gesture, can convert a form of a currently selected mark type to a form of a mark type of a different kind, according to a predetermined order.

In some embodiments, the mark type can include at least one of a numeral, a character, and a symbol.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 is a diagram for wholly describing an electronic device for sensing an input gesture and inputting a selected symbol according to the present disclosure;

FIGS. 2A and 2B are diagrams illustrating an embodiment inputting a mark type selected from an input means according to the present disclosure;

FIGS. 3A and 3B are diagrams illustrating an embodiment feeding back a selected specific function to a user by a sound according to the present disclosure;

FIGS. 4A through 4D are diagrams illustrating an embodiment analyzing a gesture of an input means and inputting a mark type selected from the input means according to the present disclosure;

FIGS. 5A through 5D are diagrams illustrating an embodiment analyzing a gesture of an input means and inputting a mark type selected from the input means according to the present disclosure;

FIGS. 6A and 6B are diagrams illustrating an embodiment sensing a second gesture and receiving a selection of a mark type of a different form according to the present disclosure;

FIGS. 7A and 7B are diagrams illustrating an embodiment forwarding a tactile signal to an input means according to the present disclosure;

FIG. 8 is a flowchart illustrating an operation sequence of sensing a first gesture from an input means and inputting a selected mark type according to an embodiment of the present disclosure;

FIG. 9 is a flowchart illustrating an operation sequence of sensing a second gesture from an input means and inputting a selected mark type according to an embodiment of the present disclosure; and

FIG. 10 is a block diagram illustrating a construction of an electronic device according to an embodiment of the present disclosure.

### DETAILED DESCRIPTION OF THE INVENTION

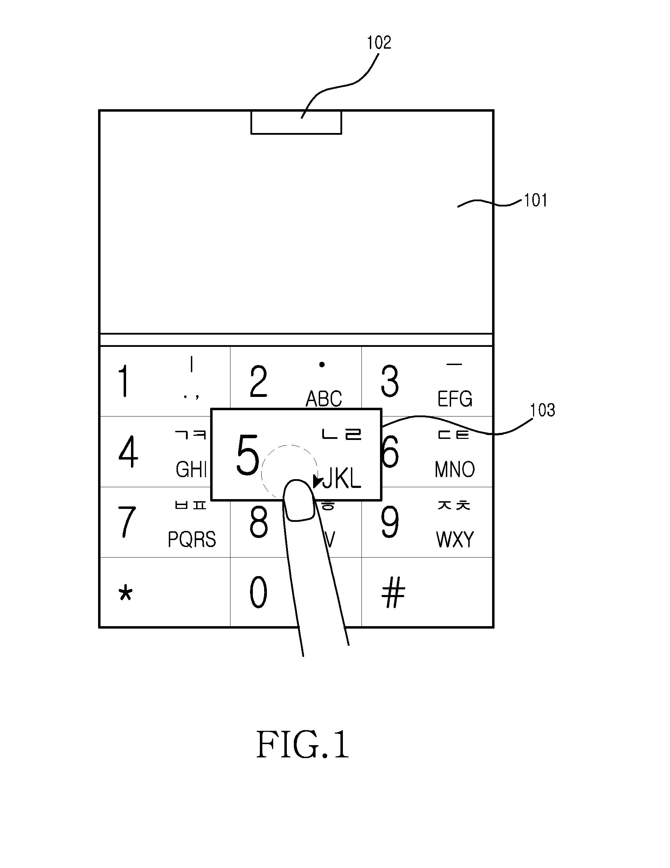

FIGURES 1 through 10, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged input device. Preferred embodiments of the present disclosure will be described herein below with reference to the accompanying drawings. In the following description, well-known functions or constructions are not described in detail since they would obscure the disclosure in unnecessary detail. Also, parts performing like function and operations are denoted by the same symbols throughout the drawings.

FIG. 1 is a diagram for wholly describing an electronic device for sensing an input gesture and inputting a selected symbol according to the present disclosure.

The electronic device of the present disclosure can sense a spatial touch input of an input means. In more detail, when the electronic device receives an input of any height ranging from a touch region to the input means as a set height, the electronic device can sense a spatial touch input of the input means which is positioned below the set height. Here, the electronic device can sense that the input means is positioned below the set height, through a sensor input unit such as a camera, a piezoelectric sensor, an infrared sensor and the like provided in the electronic device. For example, when the electronic device receives an input of a height 'h' as the set height, the electronic device can sense that the input means is positioned at a height from the touch region below the height 'h', through the sensor input unit such as the camera, the piezoelectric sensor, the infrared sensor and the like provided in the electronic device. That is, from a user viewpoint, there is an advantage that, even in a state where a user does not make the input means touch the touch region, the user can position the input means below the set height and perform a spatial touch input. The electronic device may sense that the input means has been touched to the touch region using a touch pad.

Also, the electronic device of the present disclosure can display a selected mark type among at least one mark type allocated to a touch region in which an input means is included, on a touch screen 101. First, the touch region of the electronic device is partitioned into a plurality of regions in order to receive an input of a character, a numeral, a symbol and the like. Each of the touch regions is allocated at least one mark type. Here, the mark type can be defined as including at least one of a numeral, a character, and a symbol. That is, the electronic device can display a selected mark type among at least one mark type allocated to the touch region in which the input means is included among the touch regions partitioned into the plurality of regions, on the touch screen 101.

Also, the electronic device of the present disclosure can output information about a selected mark type by a sound or an audible message. In more detail, the electronic device can output, by a sound or an audible message, information about a selected mark type among a plurality of mark types allocated to a touch region in which an input means is included, through a speaker 102. For example, when the electronic device receives an input of English alphabet 'K', the electronic device can output a an audible message "English alphabet K" and allow a user to auditorily check information about the mark type that the user inputs. Accordingly, in a situation where the blind, the vision impaired, and the old use the electronic device of the present disclosure, there is an advantage that, although not visually checking a mark type that the user inputs himself/herself, the user can receive an auditory feedback of information about the mark type. In addition, it can be effectively used even when the general public having normal eyesight cannot visually check characters intended for sending or a phone number intended for calling, such as when having to send a short message during driving or when needing to make an emergency call.

Also, the electronic device according to the present disclosure can forward a tactile signal to an input means, whenever checking that the input means has moved between respective touch regions partitioned into a plurality of regions. In more detail, the electronic device can feedback the tactile signal to the input means, whenever the input means moves between the respective touch regions. For example, when a user moves from any one region to another touch region among the touch regions partitioned into the plurality of regions, the user can receive a feedback of a tactile signal such as a vibration and the like from the electronic device. That is, from a user viewpoint, there is an advantage that the user can check that the input means has moved from any one touch region to another touch region among the plurality of touch regions, through eyesight, an auditory sense, or a tactile sense.

Also, the electronic device according to the present disclosure can analyze a gesture of the input means and receive a selection of any one of at least one mark type allocated to a touch region in which the input means is positioned. First, the electronic device senses a first gesture of the input means and, if it is determined that the first gesture is the same as a set gesture, the electronic device can receive a selection of a mark type of secondary order among at least one mark type of the same kind allocated to the touch region, according to set order. Here, the first gesture can be defined as a gesture of an input means selecting a mark type of secondary order among at least one mark type of the same kind allocated to a touch region, according to set order. For example, if the electronic device checks that the input means is positioned in a touch region in which English alphabet letters "J, K, L" are included, the electronic device receives a selection of the first letter "J". After that, if the electronic device senses the set first gesture from the input means, the electronic device receives a selection of the letter "K" set in secondary order among the English alphabet letters that are the mark types of the same kind. In the same meaning, if the electronic device again senses the set first gesture from the input means, the electronic device receives a selection of the letter "L" set in next secondary order among the English alphabet letters that are the mark types of the same kind. That is, the user can take the set first gesture and change at least one mark type of the same kind. In the aforementioned example, the user can take the set first gesture in a state of positioning the input means in the touch region in which the English alphabet letters "J, K, L" are included, and select the letter intended to be input to the electronic device among the English alphabet letters "J, K, L". That is, if the letter "J" is selected in the electronic device, the user can take the set first gesture once to select the letter "K", or can take the set first gesture twice to select the letter "L".

Also, the electronic device senses a second gesture of the input means and, if it is determined that the second gesture is the same as a set gesture, the electronic device can change a form of a currently selected mark type into a form of a mark type of a different kind, according to set order. Here, the second gesture can be defined as a gesture intending to convert a form of a current mark type into a form of a mark type of a different kind, according to set order. For example, if the electronic device checks that the input means is positioned in a touch region in which a numeral "5", Hangeul consonants "L, Z" and English alphabet letters "J, K, L" are included, the electronic device receives a selection of any one mark type among the numeral, the Hangeul consonants, and the English alphabet letters according to set order. If the electronic device checks that the input means is positioned in the touch region in which the numeral "5", the Hangeul consonants "L, Z" and the English alphabet letters "J, K, L" are included in a state where the electronic device is set in order of numeral, Hangeul consonant, and English alphabet, the electronic device receives a selection of the first numeral "5". After that, if the electronic device senses a set second gesture from the input means, the electronic device receives a selection of the Hangeul consonant "L" that is a mark type of the Hangeul consonant set in secondary order. In the same meaning, if the electronic device again senses the set second gesture from the input means, the electronic device receives a selection of the English alphabet "J" that is a mark type of the English alphabet set in next secondary order. That is, a user can take the set second gesture and change a form of a mark type allocated to the same touch region. In the aforementioned example, the user can take the set second gesture in a state where the user positions the input means in the touch region in which the numeral "5", the Hangeul consonants "L, Z" and the letters "J, K, L" are included, and change a mark type from the numeral "5" to the Hangeul consonant " L ".

Also, the electronic device of the present disclosure can zoom-in (103) a touch region in which an input means is positioned as much as a set size, zoom-out the remnant regions as much as a set size, and display the zoomed-in/out regions. In more detail, if the electronic device checks that the position of the input means is included in any one touch region among touch regions partitioned into a plurality of regions, the electronic device can zoom-in the touch region in which the input means is currently positioned as much as a set size, zoom-out the remnant regions as much as a set size, and display the zoomed-in/out regions. Accordingly, there is an advantage that the user can conveniently input a first gesture, a second gesture or the like in the touch region in which the input means is currently positioned.

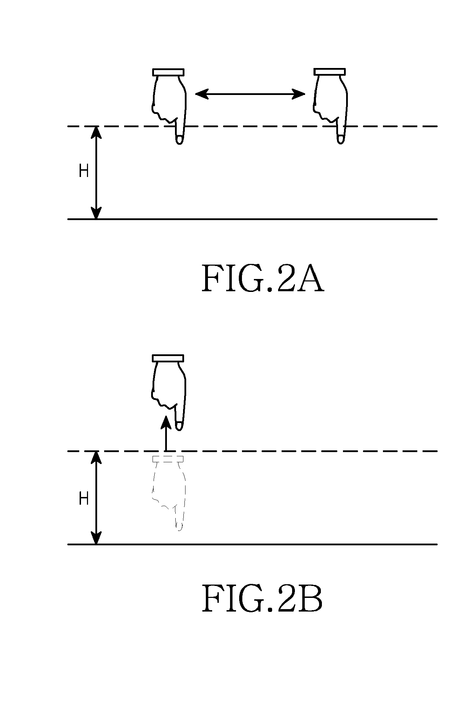

FIGS. 2A and 2B are diagrams illustrating an embodiment inputting a mark type selected from an input means according to the present disclosure. FIG. 2A is a diagram illustrating an embodiment receiving a selection of a mark type from the input means according to the present disclosure.

When the input means is positioned in a position below a set height (H), an electronic device can sense the input means. In more detail, only when the input means is positioned in the position below the set height (H), the electronic device can select a mark type of a touch region in which the input means is positioned. After that, if the electronic device senses that the input means is positioned in the position below the set height (H), the electronic device checks that the position of the input means is included in any one touch region among touch regions partitioned into a plurality of regions. That is, there is an advantage that, if the input means is positioned below the set height (H), the electronic device according to the present disclosure may sense a spatial touch input as well as a direct touch. Here, if the input means is positioned below the set height, the electronic device can sense a spatial touch input through a sensor input unit such as a camera, a piezoelectric sensor, an infrared sensor and the like provided in the electronic device. For example, when the electronic device receives an input of a height (H) as the set height, the electronic device can sense that the input means is positioned at a height below the height (H) from the touch region, through any one of the camera, the piezoelectric sensor, the infrared sensor and the like provided in the electronic device. The electronic device may also sense that the input means has been direct touch input to the touch region using a touch pad. That is, that the input means has been direct touch input to the electronic device represents that '0' has been input as the set height (H).

As described above, if the electronic device senses that the input means is positioned below the set height (H), the electronic device receives a selection of one or more mark types allocated to a touch region in which the input means is positioned among touch regions of the electronic device. For example, when a numeral "4", English alphabet letters "G, H, I" and Hangeul consonants 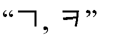 are included in a touch region in which the input means is positioned among a plurality of touch regions of the electronic device, the electronic device receives a selection of any one mark type according to set order. Assuming that order of a mark type set to the electronic device is set as order of the numeral "4", the English alphabet letters "G, H, I" and the Hangeul consonants 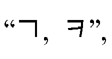 the electronic device receives a selection of the numeral "4". After that, if the input means is moved, the electronic device receives a selection of a different mark type allocated to a touch region in which the input means is currently positioned. That is, in a state where the input means is positioned below the set height (H), a user moves the input means to a touch region in which a mark type intended to be selected is positioned.

FIG. 2B is a diagram illustrating an embodiment inputting a selected mark type according to the present disclosure.

As illustrated in FIG. 2B, if the electronic device determines that the input means is positioned in a position below a set height (H), and then moves a position higher than the set height (H), the electronic device inputs a selected mark type. In more detail, if the electronic device checks that the input means is in the position higher than the set height and is not sensed in a state of receiving a selection of any one of mark types allocated to a touch region in which the input means is positioned, the electronic device checks that a set time has lapsed in a state where the input means is not sensed and then, inputs the selected mark type. For example, assume that the mark type that the electronic device selects from the input means is English alphabet "L", the set height is 'h', and the set time is one second.

In the aforementioned assumption, if the electronic device checks that the input means is positioned in a position higher than the set height (H) and the input means is not sensed, the electronic device determines if the set time one second has lapsed. If it is determined in the electronic device that the set time one second has lapsed, the electronic device inputs the selected English alphabet "L". That is, when a user intends to input a selected mark type using the input means, the user has only to position the input means in the position higher than the set height (H) during the set time or longer. Here, the reason the electronic device inputs the selected mark type only when the set time or longer lapses is for preventing a user from unintentionally positioning the input means in the position higher than the set height (H) and erroneously inputting the selected mark type. For example, when the user unintentionally positions the input means in the position higher than the set height (H) after selecting any mark type, the user can again position the input means in a position below the set height (H) and prevent erroneous input. That is, if the user is unskilled in an operation of inputting in the electronic device, the user can set a set time longer and prevent erroneous operation. If the user becomes skilled in the operation of inputting in the electronic device, the user can set the set time shorter and make a quick input possible.

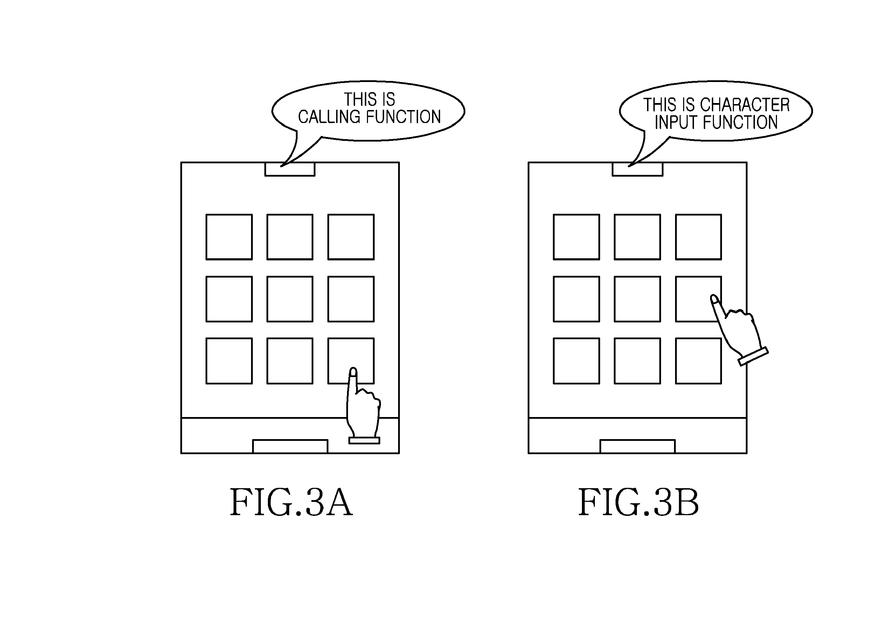

FIGS. 3A and 3B are diagrams illustrating an embodiment feeding back a selected specific function to a user by a sound according to the present disclosure. FIG. 3A is a diagram illustrating an embodiment feeding back a selected calling function to a user by a sound according to the present disclosure.

As illustrated in FIG. 3A, an electronic device can display various functions on a touch region by a user selection. In more detail, the electronic device can display icons capable of instantly executing various functions provided in the electronic device, on the touch region. For example, the electronic device can display a calling icon, a message icon, a phonebook icon, a menu icon and the like on the touch region. After that, if the electronic device senses that the input means is positioned below a set height (H), the electronic device can output, by an audible message, information about an icon in which the input means is positioned among a plurality of icons displayed on the touch region. As in an embodiment illustrated in FIG. 3A, if the input means is positioned on an icon of a calling function among the plurality of icons displayed on the touch region, the electronic device can output, by an audible message, information about the corresponding icon like an audible message "This is a calling function". That is, the electronic device according to the present disclosure feeds back information about a selected function to a user by an audible message, so there is an advantage that it is possible for even the general public to use the electronic device and, particularly, it is convenient for the blind, the vision impaired, and the old to use the electronic device.

FIG. 3B is a diagram illustrating an embodiment feeding back a selected character input function to a user by a sound according to the present disclosure.

As illustrated in FIG. 3B, the electronic device can display various functions on a touch region by a user selection. In more detail, the electronic device can display icons capable of instantly executing various functions provided in the electronic device, on the touch region. For example, the electronic device can display a calling icon, a message icon, a phonebook icon, a menu icon and the like on the touch region. After that, if the electronic device senses that the input means is positioned below a set height (H), the electronic device can output, by a audible message, information about an icon in which the input means is positioned among a plurality of icons displayed on the touch region. As in an embodiment illustrated in FIG. 3B, if the input means is positioned on an icon of a character input function among the plurality of icons displayed on the touch region, the electronic device can output, by an audible message, information about the corresponding icon like an audible message "This is a character input function". That is, the electronic device according to the present disclosure feeds back information about a selected function to a user by a sound, so there is an advantage that it is possible for even the general public to use the electronic device and, particularly, it is convenient for the blind, the vision impaired, and the old to use the electronic device.

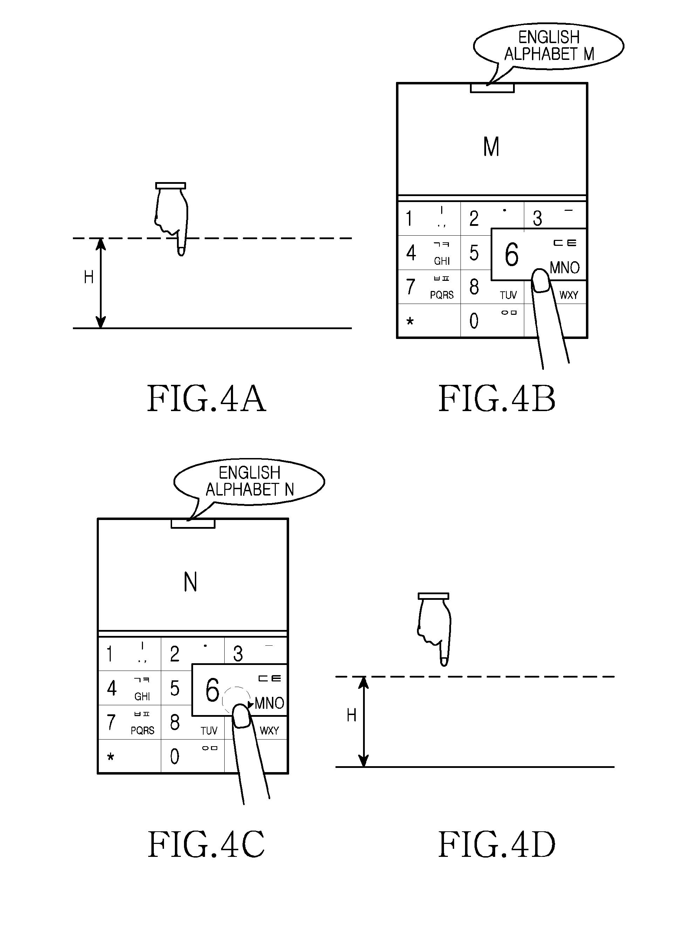

FIGS. 4A through 4D are diagrams illustrating an embodiment analyzing a gesture of an input means and inputting a mark type selected from the input means according to the present disclosure. FIG. 4A is a diagram illustrating an embodiment sensing that an input means is positioned in a position below a set height according to the present disclosure.

When the input means is positioned in a position below a set height (H), an electronic device can sense the input means. In more detail, only when the input means is positioned in the position below the set height (H), the electronic device can select a mark type of a touch region in which the input means is positioned. That is, there is an advantage that, if the input means is positioned below the set height (H), the electronic device according to the present disclosure may sense a spatial touch input as well as a direct touch. Here, if the input means is positioned below the set height, the electronic device can sense a spatial touch input through a sensor input unit such as a camera, a piezoelectric sensor, an infrared sensor and the like provided in the electronic device. For example, when the electronic device receives an input of a height (H) as the set height, the electronic device can sense that the input means is positioned at a height below the height (H) from the touch region, through any one of the camera, the piezoelectric sensor, the infrared sensor and the like provided in the electronic device. The electronic device may also sense that the input means has been direct touch input to the touch region using a touch pad. That is, that the input means has been direct touch input to the electronic device represents that '0' has been input as the set height (H).

FIG. 4B is a diagram illustrating an embodiment analyzing a position of an input means and receiving a selection of any mark type according to the present disclosure.

As illustrated in FIG. 4B, if the electronic device senses that the input means is positioned in a position below a set height, the electronic device receives a selection of one or more mark types allocated to a touch region in which the input means is positioned among a plurality of touch regions according to set order. The embodiment analyzing the position of the input means and receiving the selection of the mark type is described below in detail on the assumption that order of selection of a mark type in the electronic device has been set as order of English alphabet, numeral, and Hangeul consonant. As illustrated in FIG. 4B, the electronic device zooms-in a touch region selected from the input means as large as a set size, zooms-out other non-selected touch regions as small as a set size, and display the zoomed-in/out regions. That is, because the electronic device zooms-in the touch region selected from the input means as large as the set size and displays the zoomed-in region, there is an advantage that it is convenient for a user to take any gesture and the like in the selected touch region. After that, the electronic device checks that order set to the touch region in which the input means is positioned has been set as order of English alphabet, numeral, and Hangeul consonant and then, receives a selection of the first "M" among the English alphabet letters selected from the input means. If the order set to the touch region in which the input means is positioned has been set as order of numeral, English alphabet, and Hangeul consonant, then the electronic device receives a selection of a numeral "6". In the same meaning, if the order set to the touch region in which the input means is positioned has been set as order of Hangeul consonant, numeral, and English alphabet, then the electronic device receives a selection of the first 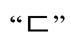 among Hangeul consonants.

Also, the electronic device can output information about a selected mark type by a sound or audible message. As illustrated in FIG. 4B, the electronic device can output, by a sound or audible message, information about a mark type selected from the input means and auditorily feed back the selected mark type to a user. For example, the electronic device outputs, by an audible message, a selection of English alphabet "M" from the input means like an audible message "English alphabet M" and allows a user to check, by hearing, the mark type that the user selects himself/herself. Accordingly, there is an advantage that the electronic device outputs, by an audible message, information about a mark type selected from the input means and allows a user such as the blind, the vision impaired, and the old to check, by hearing, the information about the selected mark type.

Also, the electronic device can display information about a mark type selected from the input means so that a user can visually check the information about the mark type and, whenever the input means moves between a plurality of touch regions, can forward a tactile signal to the input means. Accordingly, there is an advantage that, although not checking a touch region of the electronic device with eyes while inputting a mark type, whenever the input means moves between the plurality of touch regions, the user can receive a forward of a tactile signal and can get a feedback that the input means has moved from one touch region to another touch region.

FIG. 4C is a diagram illustrating an embodiment analyzing a gesture of an input means and receiving a selection of any mark type according to the present disclosure.

As illustrated in FIG. 4C, the electronic device senses a first gesture of the input means and, if it is determined that the sensed first gesture is the same as a set gesture, receives a selection of a mark type of secondary order among at least one mark type of the same kind allocated to a touch region, according to set order. For example, assume that a numeral "6", English alphabet letters "M, N, O", and Hangeul consonants 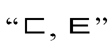 are included in a touch region in which the input means is positioned among a plurality of touch regions of the electronic device. Also, assume that order set to the electronic device has been set as order of English alphabet, numeral, and Hangeul consonant, and order of selection of the English alphabet letters is set as order of "M, N, O". In the aforementioned assumption, when the electronic device receives an input of a first gesture from the input means, the electronic device determines if the input first gesture is the same as a set gesture. Here, the first gesture can be defined as a gesture of an input means selecting a mark type of secondary order among at least one mark type of the same kind allocated to a touch region according to set order. For example, a user can set the first gesture as drawing a circle clockwise. In the aforementioned assumption, the electronic device receives a selection of the English alphabet "M" among at least one mark type allocated to the touch region in which the input means is positioned. After that, as illustrated in FIG. 4C, if the electronic device senses the set first gesture from the input means, the electronic device receives a selection of the English alphabet "N" set in secondary order among the English alphabet letters that are mark types of the same kind. In the same meaning, if the electronic device again senses the set first gesture from the input means, the electronic device receives a selection of the English alphabet "O" set in next secondary order among the English alphabet letters that are the mark types of the same kind. That is, the user can take the set first gesture and change at least one mark type of the same kind.

Also, the electronic device can output information about a selected mark type by a sound or an audible message. As illustrated in FIG. 4C, the electronic device can output, by a sound or an audible message, information about a mark type selected from the input means and auditorily feed back the selected mark type to a user. For example, the electronic device outputs, by an audible message, a selection of English alphabet "N" from the input means like an audible message "English alphabet N" and allows a user to check, by hearing, the mark type that the user selects himself/herself. Accordingly, there is an advantage that the electronic device outputs, by an audible message, information about a mark type selected from the input means and allows a user such as the blind, the vision impaired, and the old to check, by hearing, the information about the selected mark type.

FIG. 4D is a diagram illustrating an embodiment sensing a position of an input means and inputting a selected mark type according to the present disclosure.

As illustrated in FIG. 4D, if it is determined that the input means is positioned in a position below a set height (H), and then moves a position higher than the set height (H), the electronic device inputs a selected mark type. In more detail, if the electronic device checks that the input means is in the position higher than the set height and is not sensed in a state of receiving a selection of any one of mark types allocated to a touch region in which the input means is positioned, the electronic device checks that a set time has lapsed in a state where the input means is not sensed and then, inputs the selected mark type. For example, assume that the mark type that the electronic device selects from the input means is English alphabet "N", the set height is (H), and the set time is 0.5 seconds.

In the aforementioned assumption, if the electronic device checks that the input means is positioned in a position higher than the set height (H) and the input means is not sensed, the electronic device determines if the set time 0.5 seconds have lapsed. If it is determined in the electronic device that the set time 0.5 seconds have lapsed, the electronic device inputs the selected English alphabet "N". That is, when a user intends to input a selected mark type using the input means, the user has only to position the input means in the position higher than the set height (H) during the set time or longer. Here, the reason the electronic device inputs the selected mark type only when the set time or longer lapses is for preventing a user from unintentionally positioning the input means in the position higher than the set height (H) and erroneously inputting the selected mark type. For example, when the user unintentionally positions the input means in the position higher than the set height (H) after selecting any mark type, the user can again position the input means in a position below the set height (H) and prevent erroneous input. That is, if the user is unskilled in an operation of inputting in the electronic device, the user can set the set time longer and prevent erroneous operation. If the user becomes skilled in the operation of inputting in the electronic device, the user can set the set time shorter and make a quick input possible.

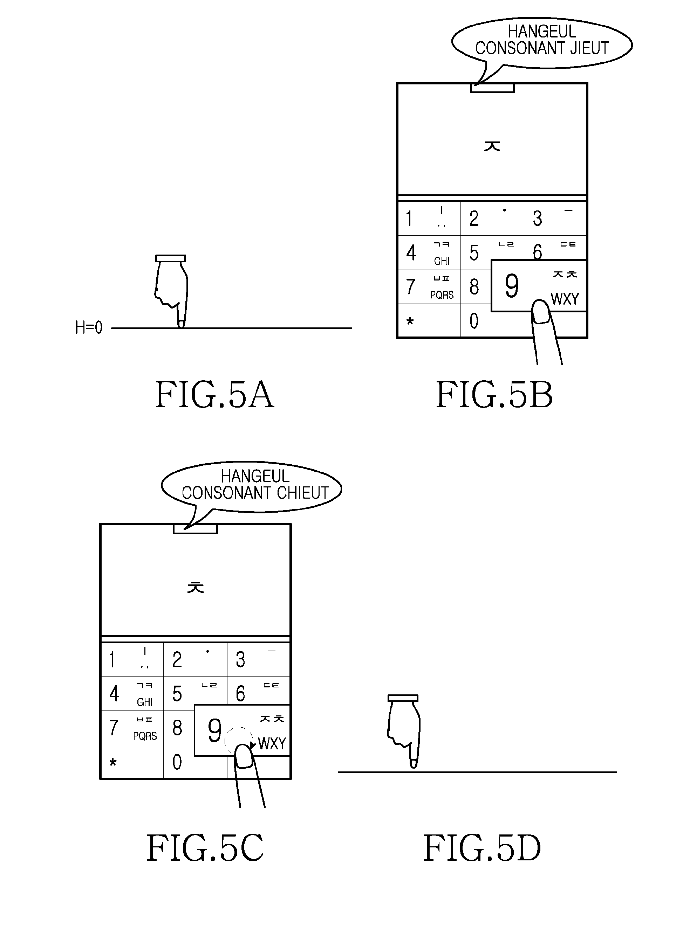

FIGS. 5A through 5D are diagrams illustrating an embodiment analyzing a gesture of an input means and inputting a mark type selected from the input means according to the present disclosure. FIG. 5A is a diagram illustrating an embodiment sensing that an input means is positioned in a position below a set height according to the present disclosure.

When the input means is positioned in a position below a set height (H), the electronic device can sense the input means. In more detail, only when the input means is positioned in the position below the set height (H), the electronic device can select a mark type of a touch region in which the input means is positioned. Here, if the input means is positioned below the set height, the electronic device can sense a spatial touch input through a sensor input unit such as a camera, a piezoelectric sensor, an infrared sensor and the like provided in the electronic device. For example, when the electronic device receives an input of a height (H) as a set height, the electronic device can sense that the input means is positioned at a height below the height (H) from the touch region, through any one of the camera, the piezoelectric sensor, the infrared sensor and the like provided in the electronic device. The electronic device may also sense that the input means has been direct touch input to the touch region using a touch pad. That is, that the input means has been direct touch input to the electronic device represents that '0' has been input as the set height (H). In FIG. 5A, the set height is input as '0' to the electronic device. Only when the input means inputs by direct touch, the electronic device can receive a touch input.

FIG. 5B is a diagram illustrating an embodiment analyzing a position of an input means and receiving a selection of any mark type according to the present disclosure.

As illustrated in FIG. 5B, if the electronic device senses that the input means is positioned in a position below a set height, the electronic device receives a selection of one or more mark types allocated to a touch region in which the input means is positioned among a plurality of touch regions according to set order. The embodiment analyzing the position of the input means and receiving the selection of the mark type is described below in detail on the assumption that order of selection of a mark type in the electronic device has been set as order of Hangeul consonant, English alphabet, and numeral. As illustrated in FIG. 5B, the electronic device zooms-in a touch region selected from the input means as large as a set size, zooms-out other non-selected touch regions as small as a set size, and display the zoomed-in/out regions. That is, because the electronic device zooms-in the touch region selected from the input means as large as the set size and displays the zoomed-in region, there is an advantage that it is convenient for a user to take any gesture and the like in the selected touch region. After that, the electronic device checks that order set to the touch region in which the input means is positioned has been set as order of Hangeul consonant, English alphabet, and numeral and then, receives a selection of the 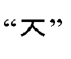 first among Hangeul consonants selected from the input means. If the order set to the touch region in which the input means is positioned has been set as order of numeral, English alphabet, and Hangeul consonant, then the electronic device receives a selection of a numeral "9". In the same meaning, if the order set to the touch region in which the input means is positioned has been set as order of English alphabet, Hangeul consonant, and numeral, then that the electronic device receives a selection of the first "W" among English alphabet letters.

Also, the electronic device can output information about a selected mark type by a sound or an audible message. As illustrated in FIG. 5B, the electronic device can output, by a sound or an audible message, information about a mark type selected from the input means and auditorily feed back the selected mark type to a user. For example, the electronic device outputs, by an audible message, a selection of Hangeul consonant 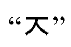 from the input means like an audible message "Hangeul consonant JiEut" and allows a user to check, by hearing, the mark type that the user selects himself/herself. Accordingly, there is an advantage that the electronic device outputs, by an audible message, information about a mark type selected from the input means and allows a user such as the blind, the vision impaired, and the old to check, by hearing, the information about the selected mark type.

Also, the electronic device can display information about a mark type selected from the input means so that a user can visually check the information about the mark type and, whenever the input means moves between a plurality of touch regions, can forward a tactile signal to the input means. Accordingly, there is an advantage that, although not checking a touch region of the electronic device with eyes while inputting a mark type, whenever the input means moves between the plurality of touch regions, the user can receive a forward of a tactile signal and can get a feedback that the input means has moved from one touch region to another touch region.

FIG. 5C is a diagram illustrating an embodiment analyzing a gesture of an input means and receiving a selection of any mark type according to the present disclosure.

As illustrated in FIG. 5C, the electronic device senses a first gesture of the input means and, if it is determined that the sensed first gesture is the same as a set gesture, receives a selection of a mark type of secondary order among at least one mark type of the same kind allocated to a touch region, according to set order. For example, assume that a numeral "9", English alphabet letters "W, X, Y", and Hangeul consonants 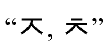 are included in a touch region in which the input means is positioned among a plurality of touch regions of the electronic device. Also, assume that order set to the electronic device has been set as order of Hangeul consonant, English alphabet, and numeral, and order of selection of the Hangeul consonants is set as order of 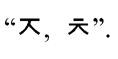 In the aforementioned assumption, when the electronic device receives an input of a first gesture from the input means, the electronic device determines if the input first gesture is the same as a set gesture. Here, the first gesture can be defined as a gesture of an input means selecting a mark type of secondary order among at least one mark type of the same kind allocated to a touch region according to set order. For example, a user can set the first gesture as drawing a circle clockwise. In the aforementioned assumption, the electronic device receives a selection of the Hangeul consonant 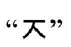 among at least one mark type allocated to the touch region in which the input means is positioned. After that, as illustrated in FIG. 5C, if the electronic device senses the set first gesture from the input means, the electronic device receives a selection of the Hangeul consonant 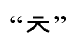 set in secondary order among the Hangeul consonants that are mark types of the same kind. That is, the user can take the set first gesture and change at least one mark type of the same kind.

Also, the electronic device can output information about a selected mark type by a sound or an audible message. As illustrated in FIG. 5C, the electronic device can output, by a sound or an audible message, information about a mark type selected from the input means and auditorily feed back the selected mark type to a user. For example, the electronic device outputs, by an audible message, a selection of Hangeul consonant 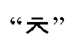 from the input means like an audible message "Hangeul consonant ChiEut" and allows a user to check, by hearing, the mark type that the user selects himself/herself. Accordingly, there is an advantage that the electronic device outputs, by an audible message, information about a mark type selected from the input means and allows a user such as the blind, the vision impaired, and the old to check, by hearing, the information about the selected mark type.

FIG. 5D is a diagram illustrating an embodiment sensing a position of an input means and inputting a selected mark type according to the present disclosure.

As illustrated in FIG. 5D, if it is determined that the input means is positioned in a position below a set height (H), and then moves a position higher than the set height (H), the electronic device inputs a selected mark type. In more detail, if the electronic device checks that the input means is in the position higher than the set height and is not sensed in a state of receiving a selection of any one of mark types allocated to a touch region in which the input means is positioned, the electronic device checks that a set time has lapsed in a state where the input means is not sensed and then, inputs the selected mark type. For example, assume that the mark type that the electronic device selects from the input means is Hangeul consonant 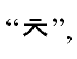 the set height is `0', and the set time is 0.3 seconds.

In the aforementioned assumption, if the electronic device checks that the input means is positioned in a position higher than the set height '0' and the input means is not sensed, the electronic device determines if the set time 0.3 seconds have lapsed. If it is determined in the electronic device that the set time 0.3 seconds have lapsed, the electronic device inputs the selected Hangeul consonant 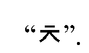 That is, when a user intends to input a selected mark type using the input means, the user has only to position the input means in the position higher than the set height during the set time or longer. Here, the reason the electronic device inputs the selected mark type only when the set time or longer lapses is for preventing a user from unintentionally positioning the input means in the position higher than the set height and erroneously inputting the selected mark type. For example, when the user unintentionally positions the input means in the position higher than the set height after selecting any mark type, the user can again position the input means in a position below the set height and prevent erroneous input. That is, if the user is unskilled in an operation of inputting in the electronic device, the user can set the set time longer and prevent erroneous operation. If the user becomes skilled in the operation of inputting in the electronic device, the user can set the set time shorter and make a quick input possible.

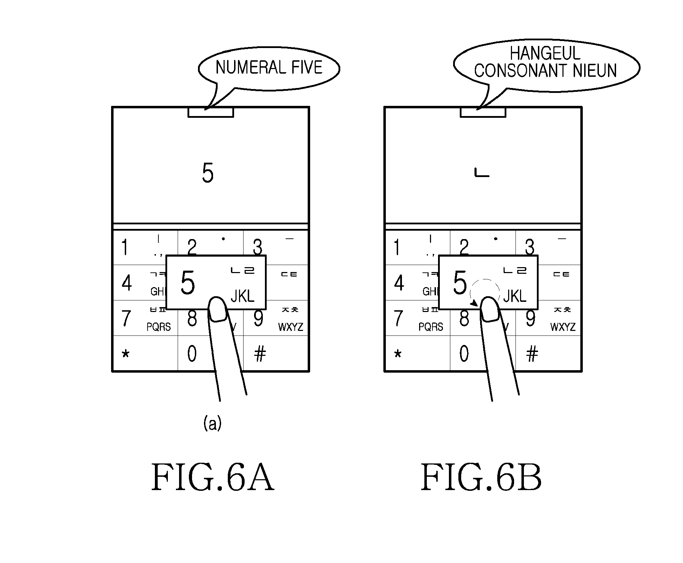

FIGS. 6A and 6B are diagrams illustrating an embodiment sensing a second gesture and receiving a selection of a mark type of a different form according to the present disclosure. FIG. 6A is a diagram illustrating an embodiment analyzing a position of an input means and receiving a selection of any mark type according to the present disclosure.

As illustrated in FIG. 6A, if the electronic device senses that the input means is positioned in a position below a set height, the electronic device receives a selection of one or more mark types allocated to a touch region in which the input means is positioned among a plurality of touch regions according to set order. The embodiment analyzing the position of the input means and receiving the selection of the mark type is described below in detail on the assumption that order of selection of a mark type in the electronic device has been set as order of numeral, Hangeul consonant, and English alphabet. As illustrated in FIG. 6A, the electronic device zooms-in a touch region selected from the input means as large as a set size, zooms-out other non-selected touch regions as small as a set size, and displays the zoomed-in/out regions. That is, because the electronic device zooms-in the touch region selected from the input means as large as the set size and displays the zoomed-in region, there is an advantage that it is convenient for a user to take any gesture and the like in the selected touch region. After that, the electronic device checks that order set to the touch region in which the input means is positioned has been set as order of numeral, Hangeul consonant, and English alphabet and then, receives a selection of a numeral "6" from the input means. If the order set to the touch region in which the input means is positioned has been set as order of English alphabet, numeral, and Hangeul consonant, then the electronic device receives a selection of English alphabet letter "J". In the same meaning, if the order set to the touch region in which the input means is positioned has been set as order of Hangeul consonant, English alphabet, and numeral, then the electronic device receives a selection of the first " L" among Hangeul consonants.

Also, the electronic device can output information about a selected mark type by a sound or an audible message. As illustrated in FIG. 6A, the electronic device can output, by a sound or an audible message, information about a mark type selected from the input means and auditorily feed back the selected mark type to a user. For example, the electronic device outputs, by an audible message, a selection of a numeral "5" from the input means like an audible message "numeral five" and allows a user to check, by hearing, the mark type that the user selects himself/herself. Accordingly, there is an advantage that the electronic device outputs, by an audible message, information about a mark type selected from the input means and allows a user such as the blind, the vision impaired, and the old to check, by hearing, the information about the selected mark type.

FIG. 6B is a diagram illustrating an embodiment analyzing a second gesture and selecting a mark type according to the present disclosure.

As illustrated in FIG. 6B, the electronic device senses a second gesture of the input means and, if it is determined that the sensed second gesture is the same as a set gesture, converts a form of a currently selected mark type into a form of a mark type of a different kind according to set order. For example, assume that a numeral "5", English alphabet letters "J, K, L", and Hangeul consonants "L, Z" are included in a touch region in which the input means is positioned among a plurality of touch regions of the electronic device. Also, assume that order set to the electronic device has been set as order of numeral, Hangeul consonant, and English alphabet, and order of selection of the Hangeul consonants is set as order of "L, Z" In the aforementioned assumption, when the electronic device receives an input of a second gesture from the input means, the electronic device determines if the input second gesture is the same as a set gesture. Here, the second gesture can be defined as a gesture of an input means converting a form of a currently selected mark type into a form of a mark type of a different kind according to set order. For example, a user can set the second gesture as drawing a circle counterclockwise. In the aforementioned assumption, the electronic device receives a selection of the numeral "5" among at least one mark type allocated to the touch region in which the input means is positioned. After that, as illustrated in FIG. 6B, if the electronic device senses the set second gesture from the input means, the electronic device receives a selection of the Hangeul consonant " L" that is a mark type of a different form set in secondary order. That is, the user can take the set second gesture and change a mark type into a mark type of a different kind.

Also, the electronic device can output information about a selected mark type by a sound or an audible message. As illustrated in FIG. 6B, the electronic device can output, by a sound or an audible message, information about a mark type selected from the input means and auditorily feed back the selected mark type to a user. For example, the electronic device outputs, by an audible message, a selection of Hangeul consonant " L" from the input means like an audible message "Hangeul consonant NiEun" and allows a user to check, by hearing, the mark type that the user selects himself/herself. Accordingly, there is an advantage that the electronic device outputs, by an audible message, information about a mark type selected from the input means and allows a user such as the blind, the vision impaired, and the old to check, by hearing, the information about the selected mark type.

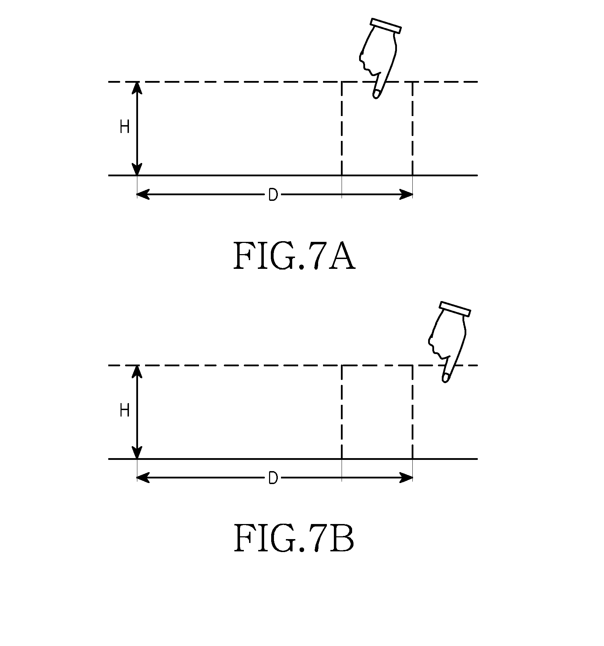

FIGS. 7A and 7B are diagrams illustrating an embodiment forwarding a tactile signal to an input means according to the present disclosure. FIG. 7A is a diagram illustrating an embodiment forwarding a tactile signal to an input means positioned within a touch region according to the present disclosure.

As illustrated in FIG. 7A, if it is determined that the input means is positioned below a set height (H) from the touch region, an electronic device of the present disclosure can forward the tactile signal to the input means. In more detail, if it is determined that the input means is positioned within a touch region (D), the electronic device can forward the tactile signal such as vibration and the like to the input means. For example, if it is determined in the electronic device that the input means is positioned within the touch region (D), the electronic device can do a feedback that the input means is currently positioned within the touch region, to the input means through the tactile signal. That is, there is an advantage that, whenever checking that the input means has moved between respective touch regions partitioned into a plurality of regions, the electronic device forwards the tactile signal to the input means and gives a feedback to a user who has poor eyesight.

FIG. 7B is a diagram illustrating an embodiment forwarding a tactile signal to an input means positioned out of a touch region according to the present disclosure.

As illustrated in FIG. 7B, the electronic device can forward a tactile signal to the input means when the input means moves out of a touch region (D). In more detail, there is an advantage that the electronic device can give a tactile feedback such as vibration and the like to the input means not only when the input means is positioned within the touch region (D) but also when the input means moves out of the touch region (D). For example, when a user who has poor eyesight moves the input means out of the touch region, the electronic device can forward a tactile signal such as a vibration and the like to the input means, and allow a user to check that the input means has currently got moved of the touch region although not visually checking himself/herself and inputting. Accordingly, from a user viewpoint, there is an advantage of being able to receive, by a tactile sense, a feedback that the input means has moved from any one touch region to another touch region among a plurality of touch regions or has moved out of the touch region.

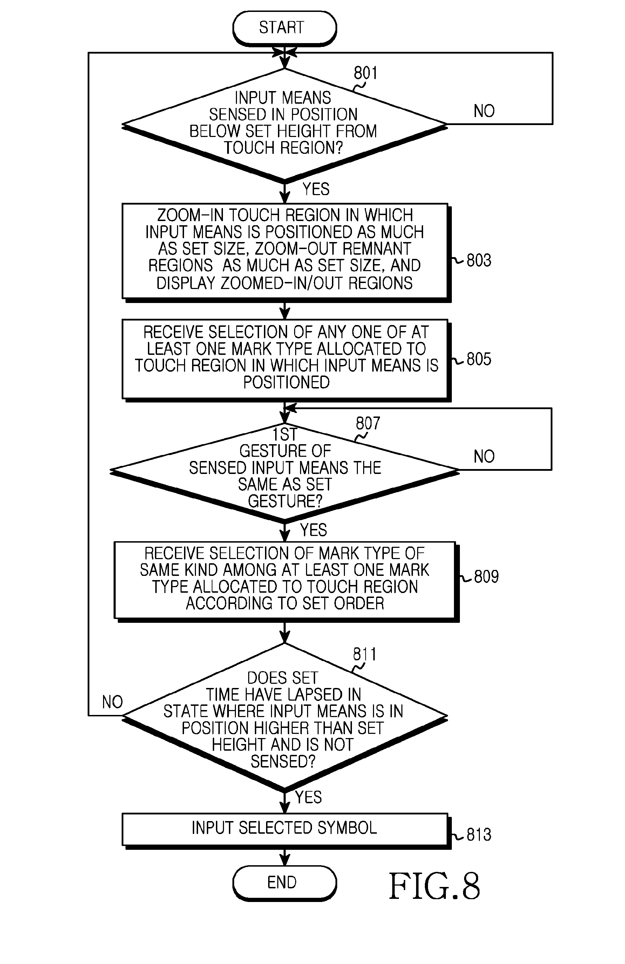

FIG. 8 is a flowchart illustrating an operation sequence of sensing a first gesture from an input means and inputting a selected mark type according to an embodiment of the present disclosure.

As illustrated in FIG. 8, in block 801, an electronic device determines if an input means has been sensed in a position below a set height from a touch region. In more detail, when the electronic device receives an input of any height ranging from the touch region to the input means as the set height, the electronic device can sense a spatial touch input of the input means positioned below the set any height. That is, only when the input means is sensed in the position below the set height, the electronic device can receive a touch input. Here, the electronic device can sense that the input means is positioned below the set height with at least one of a camera, a piezoelectric sensor, and an infrared sensor provided in the electronic device. For example, when the electronic device receives an input of a height (H) as the set height, the electronic device can sense that the input means is positioned at a height below the height (H) from the touch region, with at least one of the camera, the piezoelectric sensor, and the infrared sensor provided in the electronic device. That is, from a user viewpoint, there is an advantage that, even in a state where a user does not make the input means touch the touch region, the user can position the input means below the set any height and perform a spatial touch input. The electronic device may also sense that the input means has been touch input to the touch region using a touch pad.

If it is determined in the electronic device that the input means has been sensed in the position below the set height from the touch region, in block 803, the electronic device zooms-in the touch region in which the input means is positioned as much as a set size, zooms-out the remnant regions as much as a set size, and displays the zoomed-in/out regions. In more detail, if the electronic device checks that the position of the input means is included in any one touch region among touch regions partitioned into a plurality of regions, the electronic device can zoom-in a touch region in which the input means is currently positioned as much as a set size, zoom-out the remnant touch regions as much as a set size, and display the zoomed-in/out regions. Accordingly, there is an advantage that a user can input a first gesture, a second gesture or the like in the touch region in which the input means is currently positioned, more conveniently.

After that, in block 805, the electronic device receives a selection of any one of at least one mark type allocated to the touch region in which the input means is positioned. For example, when a numeral "4", English alphabet letters "G, H, I", and Hangeul consonants 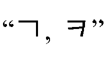 are included in the touch region in which the input means is positioned among a plurality of touch regions of the electronic device, the electronic device receives a selection of any one mark type according to set order. Assuming that order of mark types set to the electronic device is set as order of the numeral "4", the English alphabet letters "G, H, I" and the Hangeul consonants 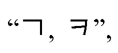 the electronic device receives a selection of the numeral "4".

After receiving the selection of any one of at least one mark type allocated to the touch region in which the input means is positioned, in block 807, the electronic device determines if a first gesture of the sensed input means is the same as a set gesture. Here, the first gesture can be defined as a gesture of an input means selecting a mark type of secondary order among at least one mark type of the same kind allocated to a touch region, according to set order. For example, if the first gesture is set as drawing a circle clockwise in the electronic device, the electronic device determines if the first gesture of the input means drawing the circle clockwise is sensed.

If it is determined in the electronic device that the first gesture of the sensed input means is the same as the set gesture, in block 809, the electronic device receives a selection of a mark type of the same kind among the at least one mark type allocated to the touch region according to set order. For example, if the electronic device checks that the input means is positioned in a touch region in which English alphabet letters "J, K, L" are included, the electronic device receives a selection of the first English alphabet "J". After that, if the electronic device senses a set first gesture from the input means, the electronic device receives a selection of the English alphabet "K" set in secondary order among the English alphabet letters that are mark types of the same kind. In the same meaning, if the electronic device again senses the set first gesture from the input means, the electronic device receives a selection of the English alphabet "L" set in next secondary order among the English alphabet letters that are the mark types of the same kind. That is, the user can take the set first gesture and change at least one mark type of the same kind. In the aforementioned example, in a state where the user positions the input means in the touch region in which the English alphabet letters "J, K, L" are included, the user can take the set first gesture and select the English alphabet intended to be input to the electronic device among the English alphabet letters "J, K, L". That is, if the English letter "J" is selected in the electronic device, the user may take the set first gesture once to select the English letter "K", or may take the set first gesture twice to select the English letter "L".

Next, in block 811, the electronic device determines if a set time has lapsed in a state where the input means is in a position higher than a set height and is not sensed. In more detail, if the electronic device checks that the input means is in the position higher than the set height and is not sensed in a state of receiving a selection of any one of mark types allocated to the touch region in which the input means is positioned, the electronic device determines if the set time has lapsed in the state where the input means is not sensed. For example, assume that the mark type that the electronic device selects from the input means is English letter "L", the set height is (H), and the set time is one second. In the aforementioned assumption, if the electronic device checks that the input means is in a position higher than the set height (H) and the input means is not sensed, the electronic device determines if the set time one second has lapsed.

If it is determined in the electronic device that the set time has lapsed in the state where the input means is in the position higher than the set height and is not sensed, in block 813, the electronic device inputs the selected symbol. For example, assume that the mark type that the electronic device selects from the input means is English letter "L", the set height is (H), and the set time is one second. In the aforementioned assumption, if the electronic device checks that the input means is positioned in a position higher than the set height (H) and the input means is not sensed, the electronic device determines if the set time one second has lapsed. If it is determined in the electronic device that the set time one second has lapsed, the electronic device inputs the selected English letter "L". That is, when a user intends to input a selected mark type using the input means, the user has only to position the input means in the position higher than the set height (H) during the set time or longer. Here, the reason the electronic device inputs the selected mark type only when the set time or longer lapses is for preventing a user from unintentionally positioning the input means in the position higher than the set height (H) and erroneously inputting the selected mark type. For example, when the user unintentionally positions the input means in the position higher than the set height (H) after selecting any mark type, the user can again position the input means in a position below the set height (H) and prevent erroneous input. That is, if the user is unskilled in an operation of inputting in the electronic device, the user can set a set time longer and prevent erroneous operation. If the user becomes skilled in the operation of inputting in the electronic device, the user can set the set time shorter and make a quick input possible.

In the aforementioned judgment process (801), if the electronic device determines that the input means is not sensed in the position below the set height from the touch region, then the electronic device repeats the judgment process (801) because it does not sense a touch input from the input means. Also, in the aforementioned judgment process (807), if it is determined in the electronic device that the first gesture of the sensed input means is not the same as the set gesture, then the electronic device repeats the judgment process (807). Also, if it is determined in the electronic device that the set time has not lapsed in the state where the input means is in the position higher than the set height and is not sensed, the electronic device repeats the aforementioned judgment process (801).

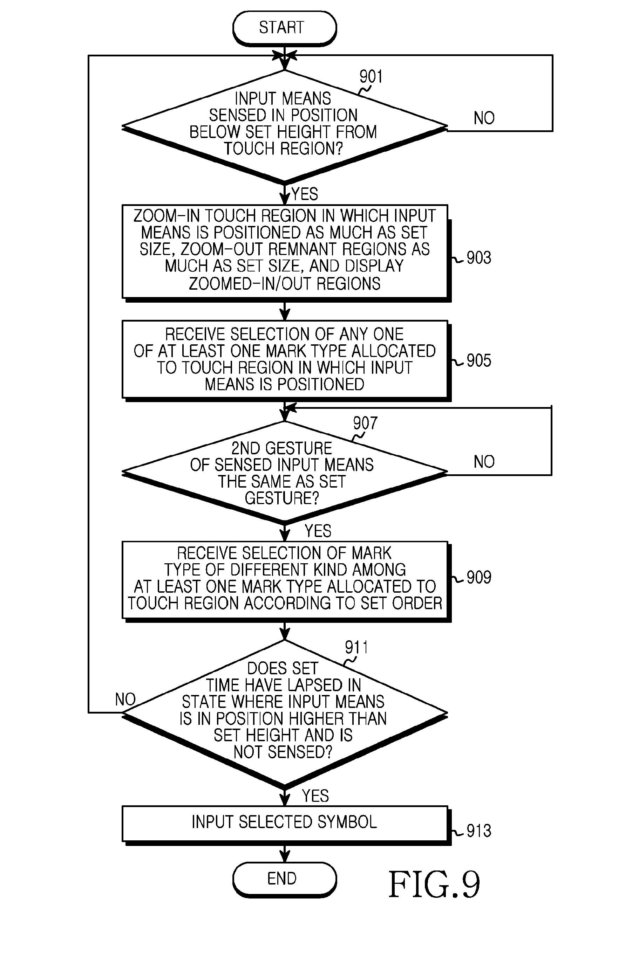

FIG. 9 is a flowchart illustrating an operation sequence of sensing a second gesture from an input means and inputting a selected mark type according to an embodiment of the present disclosure.

As illustrated in FIG. 9, in block 901, an electronic device determines if an input means has been sensed in a position below a set height from a touch region. In more detail, when the electronic device receives an input of any height ranging from the touch region to the input means as the set height, the electronic device can sense a spatial touch input of the input means positioned below the set any height. That is, only when the input means is sensed in the position below the set height, the electronic device can receive a touch input. Here, the electronic device can sense that the input means is positioned below the set height with at least one of a camera, a piezoelectric sensor, and an infrared sensor provided in the electronic device. For example, when the electronic device receives an input of a height (H) as the set height, the electronic device can sense that the input means is positioned at a height below the height (H) from the touch region, with at least one of the camera, the piezoelectric sensor, and the infrared sensor provided in the electronic device. That is, from a user viewpoint, there is an advantage that, even in a state where a user does not make the input means touch the touch region, the user can position the input means below the set any height and perform a spatial touch input. The electronic device may also sense that the input means has been touch input to the touch region using a touch pad.

If it is determined in the electronic device that the input means has been sensed in the position below the set height from the touch region, in block 903, the electronic device zooms-in the touch region in which the input means is positioned as much as a set size, zooms-out the remnant regions as much as a set size, and displays the zoomed-in/out regions. In more detail, if the electronic device checks that the position of the input means is included in any one touch region among touch regions partitioned into a plurality of regions, the electronic device can zoom-in a touch region in which the input means is currently positioned as much as a set size, zoom-out the remnant touch regions as much as a set size, and display the zoomed-in/out regions. Accordingly, there is an advantage that a user can input a first gesture, a second gesture or the like in the touch region in which the input means is currently positioned, more conveniently.

After that, in block 905, the electronic device receives a selection of any one of at least one mark type allocated to the touch region in which the input means is positioned. For example, when a numeral "5", English alphabet letters "J, K, L", and Hangeul consonants "L, 2" are included in the touch region in which the input means is positioned among a plurality of touch regions of the electronic device, the electronic device receives a selection of any one mark type according to set order. Assuming that order of mark types set to the electronic device is set as order of the numeral "5", the English alphabet letters "J, K, L" and the Hangeul consonants "L, 2" the electronic device receives a selection of the numeral "5".

After receiving the selection of any one of at least one mark type allocated to the touch region in which the input means is positioned, in block 907, the electronic device determines if a second gesture of the sensed input means is the same as a set gesture. Here, the second gesture can be defined as a gesture of an input means intended to convert a form of a current mark type into a form of a mark type of a different kind, according to set order. For example, if the second gesture is set as drawing a circle counterclockwise in the electronic device, the electronic device determines if the second gesture of the input means drawing the circle counterclockwise is sensed.

If it is determined in the electronic device that the second gesture of the sensed input means is the same as the set gesture, in block 909, the electronic device receives a selection of a mark type of a different kind among the at least one mark type allocated to the touch region according to set order. For example, if the electronic device checks that the input means is positioned in a touch region in which a numeral "5", Hangeul consonants "L, 2" and English alphabet letters "J, K, L" are included, the electronic device receives a selection of any one mark type according to set order among the numeral, the Hangeul consonants, and the English alphabet letters. In a state where order of numeral, Hangeul consonants, and English alphabet letters has been set, if the electronic device senses that the input means is positioned in the touch region in which the numeral "5", the Hangeul consonants "L, 2" and the English alphabet letters "J, K, L" are included, the electronic device receives a selection of the first numeral "5". After that, if the electronic device senses a set second gesture from the input means, the electronic device receives a selection of the Hangeul consonant " L" that is a mark type of the Hangeul consonant set in secondary order. In the same meaning, if the electronic device again senses the set second gesture from the input means, the electronic device receives a selection of the English alphabet "L" that is a mark type of the English alphabet set in next secondary order. That is, the user can take the set second gesture and change a form of a mark type allocated to the same touch region. In the aforementioned example, in a state where the user positions the input means in the touch region in which the numeral "5", the Hangeul consonants "L, 2" and the English alphabet letters "J, K, L" are included, the user can take the set second gesture and change a mark type from the numeral "5" to the Hangeul consonant " L ".

Next, in block 911, the electronic device determines if a set time has lapsed in a state where the input means is in a position higher than the set height and is not sensed. In more detail, if the electronic device checks that the input means is in the position higher than the set height and is not sensed in a state of receiving a selection of any one of mark types allocated to the touch region in which the input means is positioned, the electronic device determines if the set time has lapsed in the state where the input means is not sensed. For example, assume that the mark type that the electronic device selects from the input means is English letter "L", the set height is (H), and the set time is one second. In the aforementioned assumption, if the electronic device checks that the input means is in a position higher than the set height (H) and the input means is not sensed, the electronic device determines if the set time one second has lapsed.

If it is determined in the electronic device that the set time has lapsed in the state where the input means is in the position higher than the set height and is not sensed, in block 913, the electronic device inputs the selected symbol. For example, assume that the mark type that the electronic device selects from the input means is English letter "L", the set height is (H), and the set time is one second. In the aforementioned assumption, if the electronic device checks that the input means is positioned in a position higher than the set height (H) and the input means is not sensed, the electronic device determines if the set time one second has lapsed. If it is determined in the electronic device that the set time one second has lapsed, the electronic device inputs the selected English letter "L". That is, when a user intends to input a selected mark type using the input means, the user has only to position the input means in the position higher than the set height (H) during the set time or longer. Here, the reason the electronic device inputs the selected mark type only when the set time or longer lapses is for preventing a user from unintentionally positioning the input means in the position higher than the set height (H) and erroneously inputting the selected mark type. For example, when the user unintentionally positions the input means in the position higher than the set height (H) after selecting any mark type, the user can again position the input means in a position below the set height (H) and prevent erroneous input. That is, if the user is unskilled in an operation of inputting in the electronic device, the user can set a set time longer and prevent erroneous operation. If the user becomes skilled in the operation of inputting in the electronic device, the user can set the set time shorter and make a quick input possible.

In the aforementioned judgment process (901), if the electronic device determines that the input means is not sensed in the position below the set height from the touch region, then the electronic device repeats the judgment process (901) because it does not sense a touch input from the input means. Also, in the aforementioned judgment process (907), if it is determined in the electronic device that the second gesture of the sensed input means is not the same as the set gesture, then that the electronic device repeats the judgment process (907). Also, if it is determined in the electronic device that the set time has not lapsed in the state where the input means is in the position higher than the set height and is not sensed, the electronic device repeats the aforementioned judgment process (901).

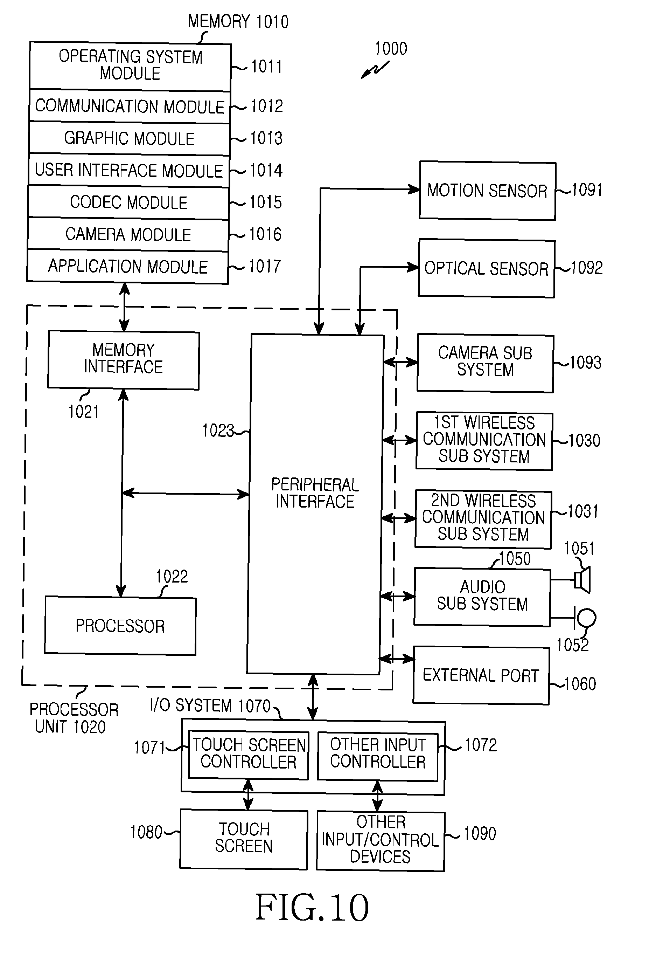

FIG. 10 is a block diagram illustrating a construction of an electronic device according to an embodiment of the present disclosure. This electronic device 1000 can be a portable electronic device, and can be a device such as a portable terminal, a mobile phone, a mobile pad, a media player, a tablet computer, a handheld computer or a Personal Digital Assistant (PDA). Also, the electronic device 1000 may be any portable electronic device including a device combining two or more functions among these devices.

This electronic device 1000 includes a memory 1010, a processor unit 1020, a first wireless communication sub system 1030, a second wireless communication sub system 1031, an external port 1060, an audio sub system 1050, a speaker 1051, a microphone 1052, an Input/Output (I/O) system 1070, a touch screen 1080, and other input or control devices 1090. The memory 1010 and the external port 1060 can be used in plural.

The processor unit 1020 can include a memory interface 1021, one or more processors 1022, and a peripheral device interface 1023. In some embodiments, the whole processor unit 1020 is called a processor. In the present disclosure, the processor unit 1020 analyzes a gesture of an input means and inputs any one of at least one mark type allocated to a touch region in which the input means is positioned. Also, the processor unit 1020 checks that the input means is in a position higher than a set height and is not sensed, checks that a set time has lapsed in a state where the input means is not sensed, and inputs a selected mark type. Also, the processor unit 1020 senses a first gesture of the input means, senses a second gesture of the input means and, if it is determined that the sensed second gesture is the same as a set gesture, converts a form of a currently selected mark type into a form of a mark type of a different kind according to set order.

The processor 1022 executes various software programs and performs various functions for the electronic device 1000, and also performs processing and control for voice communication and data communication. Also, in addition to this common function, the processor 1022 plays a role of executing a specific software module (i.e., an instruction set) stored in the memory 1010 and performing specific various functions corresponding to the specific software module. That is, the processor 1022 performs a method of an embodiment of the present disclosure in conjunction with the software modules stored in the memory 1010.

The processor 1022 can include one or more data processors, image processors, or coder/decoders (CODEC). The data processor, image processor or CODEC may be configured separately. Also, the data processor, image processor or CODEC may be configured as various processors performing different functions. The peripheral device interface 1023 connects the I/O sub system 1070 of the electronic device 1000 and various peripheral devices thereof to the processor 1022 and the memory 1010 (through a memory interface).

Various configuration elements of the electronic device 1000 can be coupled by one or more communication buses (not denoted by reference numeral) or stream lines (not denoted by reference numeral).

The external port 1060 is used for direct connecting a portable electronic device (not shown) to other electronic devices or indirect connecting to other electronic devices through a network (e.g., the internet, an intranet, a wireless LAN and the like). The external port 1060 refers to, for example, a Universal Serial Bus (USB) port or a FIREWIRE port and the like, although not limited thereto.

A motion sensor 1091 and an optical sensor 1092 can be coupled to the peripheral device interface 1023 and make possible various functions. For example, the motion sensor 1091 and the optical sensor 1092 can be coupled to the peripheral device interface 1023 and each make it possible to sense a motion of the electronic device and sense light from external sources. Besides this, other sensors such as a positioning system, a temperature sensor or a biological sensor and the like can be connected to the peripheral device interface 1023 and perform related functions. The motion sensor 1091 according to the present disclosure checks that an input means is sensed in a position below a set height from a touch region, and checks that the position of the input means is included in any one touch region among touch regions partitioned into a plurality of regions. Also, the motion sensor 1091 senses a height ranging from the touch region to the input means.

The camera sub system 1093 can perform a camera function such as snapshot and video clip recording. The camera sub system 1093 according to the present disclosure checks that the input means is sensed in a position below a set height from a touch region, and checks that the position of the input means is included in any one touch region among touch regions partitioned into a plurality of regions. Also, the camera sub system 1093 senses a height ranging from the touch region to the input means.

The optical sensor 1092 can be a Charged Coupled Device (CCD) or a Complementary Metal-Oxide Semiconductor (CMOS) device.

A communication function is performed through one or more wireless communication sub systems 1030 and 1031. The wireless communication sub systems 1030 and 1031 can include a radio frequency receiver and transceiver and/or an optical (e.g., infrared ray) receiver and transceiver. The first communication sub system 1030 and the second communication sub system 1031 can be distinguished depending on a communication network in which the electronic device 1000 communicates. For example, the communication network can include a communication sub system designed to operate through a Global System for Mobile Communication (GSM) network, an Enhanced Data GSM Environment (EDGE) network, a Code Division Multiple Access (CDMA) network, a Wideband-Code Division Multiple Access (W-CDMA) network, a Long Term Evolution (LTE) network, an Orthogonal Frequency Division Multiple Access (OFDMA) network, a Wireless-Fidelity (Wi-Fi) network, a Worldwide Interoperability for Microwave Access (WiMAX) network or/and a Bluetooth network and the like, although not limited thereto. Because the present disclosure discloses Wi-Fi communication through the Wi-Fi network, the first wireless communication sub system 1030 and the second wireless communication sub system 1031 may be united and configured as one wireless communication sub system.

The audio sub system 1050 can be coupled to the speaker 1051 and the microphone 1052 and take charge of input and output of an audio stream such as voice recognition, voice replication, digital recording, and phone function. That is, the audio sub system 1050 communicates with a user through the speaker 1051 and the microphone 1052. The audio sub system 1050 receives a data stream through the peripheral device interface 1023 of the processor unit 1020, and converts the received data stream into an electric signal. The converted electric signal is forwarded to the speaker 1051. The speaker 1051 converts the electric signal into an audible sound wave and outputs the sound wave. The microphone 1052 converts sound waves forwarded from people or other sound sources into electric signals. The audio sub system 1050 receives the converted electric signal from the microphone 1052. The audio sub system 1050 converts the received electric signal into an audio data stream, and transmits the converted audio data stream to the peripheral device interface 1023. The audio sub system 1050 can include a detachable earphone, headphone, or headset. The audio sub system 1050 according to the present disclosure outputs, by a sound or an audible message, information about a selected mark type among a plurality of mark types allocated to a touch region in which an input means is included.

The I/O sub system 1070 can include a touch screen controller 1071 and/or other input controller 1072. The touch screen controller 1071 can be coupled to the touch screen 1080. The touch screen 1080 and the touch screen controller 1071 can detect a contact and a motion or an interruption thereof using not only capacitive, resistive, infrared and surface acoustic wave technologies for determining one or more contacts with the touch screen 1080 but also any multi-touch sensing technology including other proximity sensor arrays or other elements, although not limited thereto. The other input controller 1072 can be coupled to the other input/control devices 1090. The other input/control devices 1090 can be a pointer device and the like such as one or more buttons, locker switches, thumb-wheels, dials, sticks, and/or styluses.

The touch screen 1080 provides an I/O interface between the electronic device 1000 and a user. That is, the touch screen 1080 forwards a user's touch input to the electronic device 1000. Also, the touch screen 1080 is a medium showing a user an output from the electronic device 1000. That is, the touch screen 1080 shows a visual output to the user. This visual output is shown in a form of a text, a graphic, a video and a combination thereof.

The touch screen 1080 can use various displays. For example, the touch screen 1080 can use a Liquid Crystal Display (LCD), a Light Emitting Diode (LED), a Light emitting Polymer Display (LPD), an Organic Light Emitting Diode (OLED), an Active Matrix Organic Light Emitting Diode (AMOLED) or a Flexible LED (FLED), although not limited thereto. In the present disclosure, the touch screen 1080 checks that an input means is sensed in a position below a set height from a touch region, and checks that the position of the input means is included in any one touch region among touch regions partitioned into a plurality of regions. Also, the touch screen 1080 senses a height ranging from the touch region to the input means. Also, the touch screen 1080 displays a selected mark type among at least one mark type allocated to the touch region in which the input means is included and, whenever checking that the input means has moved between the respective touch regions partitioned into the plurality of regions, forwards a tactile signal to the input means. Also, the touch screen 1080 zooms-in the touch region in which the input means is positioned as much as a set size, zooms-out the remnant regions as much as a set size, and displays the zoomed-in/out regions, and receives a selection of any one of at least one mark type allocated to the touch region in which the input means is included. Also, if it is determined that a sensed first gesture is the same as a set gesture, the touch screen 1080 receives a selection of a mark type of secondary order among at least one mark type of the same kind allocated to the touch region.

The memory 1010 can be coupled to the memory interface 1021. The memory 1010 can include one or more high-speed random access memories and/or non-volatile memories such as magnetic disk storage devices, one or more optical storage devices and/or flash memories (e.g., NAND, NOR).

The memory 1010 stores software. A software configuration element include an operation system module 1011, a communication module 1012, a graphic module 1013, a user interface module 1014 and a CODEC module 1015, a camera module 1016, one or more application modules 1017 and the like. Also, the module that is the software configuration element can be expressed as a set of instructions and therefore, the module is also expressed as an instruction set. The module is also expressed as a program. In the present disclosure, the memory 1010 automatically stores a second map tile image. The operating system software 1011 (for example, a built-in operating system such as WINDOWS, LINUX, Darwin, RTXC, UNIX, OS X, or VxWorks) includes various software configuration elements controlling a general system operation. This control of the general system operation means, for example, memory management and control, storage hardware (device) control and management, power control and management and the like. This operating system software performs a function making smooth communication between various hardware (device) and software configuration elements (modules).

The communication module 1012 can make possible communication with other electronic devices such as a computer, a server and/or a portable terminal and the like through the wireless communication sub systems 1030 and 1031 or the external port 1060.

The graphic module 1013 includes various software configuration elements for providing and displaying a graphic on the touch screen 1080. The term of graphic is used as a meaning including a text, a web page, an icon, a digital image, a video, an animation and the like. In the present disclosure, the touch screen 1080 displays a message concerning setting or non-setting of a smart rotation function, and receives a selection of any region included in the message.

The user interface module 1014 includes various software configuration elements associated with a user interface. The user interface module 1014 includes information about how a state of the user interface is changed or whether the change of the state of the user interface is carried out in which condition and the like.

The CODEC module 1015 can include a software configuration element associated with encoding and decoding of a video file. The CODEC module 1015 can include a video stream module such as an MPEG module and/or an H204 module. Also, the CODEC module 1015 can include various audio file CODEC modules such as AAA, AMR, WMA and the like. Also, the CODEC module 1015 can include an instruction set corresponding to the embodiment method of the present disclosure.

The camera module 1016 includes a camera related software configuration element for making camera related process and functions possible.

The application module 1017 includes a browser, an e-mail, an instant message, word processing, keyboard emulation, an address book, a touch list, a widget, Digital Right Management (DRM), voice recognition, voice replication, a position determining function, a location based service, and the like.

Various functions of the electronic device 1000 according to the present disclosure mentioned above and to be mentioned below can be executed by hardware including one or more stream processing and/or Application Specific Integrated Circuits (ASIC) and/or software and/or a combination thereof.

According to an electronic device and method of the present disclosure for sensing an input gesture and inputting a selected symbol, there is an effect that a user is able to input as desired through a connection operation of one-touch input in a smart device or virtual space not capable of recognizing a keyboard.

The above-described methods according to the present disclosure can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the disclosure has been shown and described with reference to certain preferred embodiments thereof, it will be understood by those skilled in the art that various changes in form and details may be made therein without departing from the spirit and scope of the disclosure as defined by the appended claims.

## Claims

1. An operation method of an electronic device, the method comprising:
determining that an input means has been sensed in a position below a predetermined height from touch regions;
determining that the position of the input means is in any one touch region among the touch regions partitioned into a plurality of regions; and
analyzing a gesture of the input means and inputting any one of at least one mark type allocated to the touch region in which the input means is positioned.

2. The method of claim 1, wherein determining that an input means has been sensed in a position below a predetermined height from touch regions comprises:
sensing a height from the touch region to the input means using at least one of a camera, a piezoelectric sensor, an infrared sensor, and a touch pad.

3. The method of claim 1, further comprising outputting, by display or sound, information about a selected mark type among at least one mark type allocated to the touch region in which the input means is positioned.

4. The method of claim 1, further comprising forwarding a tactile signal to the input means upon a determination that the input means has moved between the respective touch regions partitioned into the plurality of regions.

5. The method of claim 1, further comprising zooming-in the touch region in which the input means is positioned as much as a predetermined size, zooming-out the remnant region as much as a predetermined size, and displaying the zoomed-in/out regions.

6. The method of claim 1, wherein analyzing a gesture of the input means and inputting any one of the at least one mark type allocated to the touch region in which the input means is positioned comprises:
receiving a selection of any one of at least one mark type allocated to the touch region in which the input means is positioned;
determining that the input means is in a position higher than the predetermined height and is not sensed;
determining that a predetermined time has lapsed in a state where the input means is not sensed; and
inputting the selected mark type.

7. The method of claim 6, further comprising:
sensing a first gesture of the input means, and
if it is determined that the sensed first gesture is the same as a predetermined gesture, receiving a selection of a mark type of secondary order among at least one mark type of the same kind allocated to the touch region, according to a predetermined order; and
sensing a second gesture of the input means, and
if it is determined that the sensed second gesture is the same as a predetermined gesture, converting a form of a currently selected mark type to a form of a mark type of a different kind, according to a predetermined order.

8. An electronic device comprising:
at least one of a camera sub system (1093), a motion sensor (1091), and a touch screen (1080) arranged to determine that an input means has been sensed in a position below a predetermined height from touch regions, and to determine that the position of the input means is in any one touch region among the touch regions partitioned into a plurality of regions; and
a processor unit (1020) arranged to analyze a gesture of the input means and input any one of at least one mark type allocated to the touch region in which the input means is positioned.

9. The device of claim 8, wherein at least one of the camera sub system (1093), the motion sensor (1091), and the touch screen (1080) is arranged to sense a height from the touch region to the input means.

10. The device of claim 8, further comprising output means (1051, 1080) arranged to output, by display or sound, information about a selected mark type among a plurality of mark types allocated to the touch region in which the input means is positioned.

11. The device of claim 8, wherein the touch screen (1080) is arranged to forward a tactile signal to the input means upon a determination that the input means has moved between the respective touch regions partitioned into the plurality of regions.

12. The device of claim 8, wherein the touch screen (1080) is arranged to zoom-in the touch region in which the input means is positioned as much as a predetermined size, zoom-out the remnant region as much as a predetermined size, and display the zoomed-in/out regions.

13. The device of claim 8, wherein the touch screen (1080) is arranged to receive a selection of any one of at least one mark type allocated to the touch region in which the input means is positioned, and
wherein the processor unit (1020) is arranged to determine that the input means is in a position higher than the set height and is not sensed, determine that a predetermined time has lapsed in a state where the input means is not sensed, and input the selected mark type.

14. The device of claim 13, wherein the processor unit (1020) is arranged
to sense a first gesture of the input means, and wherein, if it is determined that the sensed first gesture is the same as a predetermined gesture, the touch screen (1020) is arranged to receive a selection of a mark type of secondary order among at least one mark type of the same kind allocated to the touch region, according to a predetermined order; and
to sense a second gesture of the input means and, if it is determined that the sensed second gesture is the same as a predetermined gesture, convert a form of a currently selected mark type to a form of a mark type of a different kind, according to a predetermined order.

15. The method of claim 1, or the device of claim 8, wherein the mark type comprises at least one of a numeral, a character, and a symbol.
